# EUROPÄISCHE PATENTANMELDUNG

(11) **EP 4 722 620 A2**
(43) Veröffentlichungstag der Anmeldung: **08.04.2026**
(21) Anmeldenummer: 26160492.0
(22) Anmeldetag: 21.06.2022
(51) Int. Cl.: F26B 23/02

(54) **VERFAHREN ZUM SPEICHERN UND SPÄTEREN RÜCKGEWINNEN VON ELEKTRISCHER ENERGIE**

(62) Teilanmeldung aus: 22180137.6
(71) Anmelder: SWISS KRONO Tec AG, 6004 Luzern (CH)
(72) Erfinder: Hecht, Hendrik, 16816 Buskow (DE)
(74) Vertreter: Gramm, Lins & Partner Patent- und Rechtsanwälte PartGmbB

(57) **Zusammenfassung**

Die Erfindung betrifft ein Verfahren zum Speichern und späterer Rückgewinnung von elektrischer Energie mit folgenden Schritten:
a) Erzeugung eines Staubes, mittels einer elektrisch angetriebenen Vorrichtung,
b) Speichern des Staubs in einem Staubbunker,
c) Auslagern zumindest eines Teils des Staubs aus dem Staubbunker, wenn Bedarf an elektrischer Energie besteht,
d) Verbrennen des Staubs zur Erzeugung thermischer Energie,
e) Umwandeln der thermischen Energie in elektrische Energie.

## Beschreibung

Die Erfindung betrifft ein Verfahren zum Speichern und späteren Rückgewinnen von elektrischer Energie.

Mit der weltweiten Abkehr von fossilen Brennstoffen befindet sich die Energiewirtschaft im Umbruch. Die erneuerbaren Energien: Wasserkraft, Biomasse, Sonnenlicht und Windkraft werden hauptsächlich in elektrische Energie umgewandelt, die in geeigneter Form gespeichert werden muss.

Zur Speicherung und anschließender Rückgewinnung von elektrischer Energie gibt es verschiedene Möglichkeiten. Die wohl am häufigsten großtechnisch eingesetzten Energiespeicher sind Pumpspeicherkraftwerke. Die Pumpspeichertechnik hat sich technisch am besten bewährt. Hierzu wird Wasser aus einem Unterbecken in ein höher gelegenes Becken gepumpt und dort aufbewahrt. Die elektrische Energie wird als potentielle Energie des Wassers gespeichert. Bei Bedarf an Energie wird das Wasser über eine Turbine abgelassen und mit Hilfe eines Generators wird so die elektrische Energie zurückgewonnen. Pumpspeicherkraftwerke arbeiten mit einem Wirkungsgrad zwischen 70 und 80 %. Ausschlaggebend für die Energiedichte ist der Höhenunterschied zwischen den beiden Becken.

Pumpspeicherkraftwerke sind konstruktiv sehr aufwändig und teuer herzustellen. Außerdem greifen sie nicht unerheblich in die Natur ein, wobei die Bedeutsamkeit des Eingriffs von der Größe der Becken bestimmt wird. Aufgrund ihrer Größe und Kosten sind Pumpspeicherkraftwerke eher für kommunale Versorgungsunternehmen als für Industriebetriebe geeignet.

Aus der Theorie, dass Strom in einem supraleitenden Stromkreis unendlich lange fließen kann, ohne dass weitere Energie zugeführt wird, wurden supraleitende magnetische Energiespeicher entwickelt. Dafür durchfließt ein Gleichstrom aus einem Gleichrichter eine Spule, die aus supraleitendem Material besteht, wobei ein Magnetfeld erzeugt wird, in dem die Energie gespeichert wird. Nach Ende der Beladung wird die Stromzufuhr unterbrochen. Zum Entladen der gespeicherten Energie koppelt man den Stromkreis erneut an den Wechselrichter, sodass aus dem Gleichstrom Wechselstrom erzeugt wird. Für eine industrielle Anwendung ist ein solcher Speicher gut geeignet, er ist aber ebenfalls baulich sehr aufwändig und in seiner Herstellung kostenintensiv. Abgesehen von der Verwendung elektrischer Energiespeicher in dem Bereich der Elektromobilität wird elektrische Energie sinnvollerweise dann gespeichert, wenn der Bedarf niedrig ist und die Energieerzeugungseinrichtung dennoch kontinuierlich betrieben werden soll. Dann, wenn der Bedarf an elektrischer Energie wieder steigt, wird der Energiespeicher entleert und der Strom in das Netz eingespeist. Eine solche Speicherung ist auch innerhalb von Industriebetrieben sinnvoll.

Eine ganze Reihe von Industriebetrieben erzeugt in eigenen Kraftwerken den für ihren Betrieb notwendigen Strom selbst. Wenn die Anlage außer Betrieb genommen wird, muss das Kraftwerk entweder abgestellt oder der überschüssig produzierte Strom in das öffentliche Versorgungsnetz eingespeist werden. Das Hoch- und Runterfahren eines Kraftwerks erfolgt einerseits zeitverzögert zum Energiebedarf und reduziert andererseits seinen Wirkungsgrad erheblich. Der in das öffentliche Versorgungsnetz eingespeiste Strom ist für den Betrieb "verloren". Bei Spitzen im elektrischen Energiebedarf, die vom eigenen Kraftwerk nicht oder nicht kurzfristig zur Verfügung gestellt werden kann, muss der Betrieb zu einem höheren Preis Strom wieder zukaufen, als ihm für die Einspeisung in das Versorgungsnetz gezahlt wurde.

Der Einsatz von erneuerbaren Energien zur Stromerzeugung bringt weitere Probleme bezüglich der Versorgung der Bevölkerung und der Industrien mit elektrischer Energie mit sich. Ist ausreichend Wind und Licht vorhanden, lässt sich entsprechend viel Strom mit Windrädern und Solaranlagen erzeugen. Ist es windstill und dunkel, lässt sich wenig und im schlechtesten Fall gar keine elektrische Energie mit Windrädern und Solaranlagen erzeugen. Da auch für elektrische Energie der Preis durch Angebot und Nachfrage bestimmt wird, ist im ersteren Fall der Strompreis niedrig und im letzteren Fall hoch. Es ist deshalb sinnvoll, dann, wenn der Strompreis niedrig ist, elektrische Energie zu speichern und zu dem Zeitpunkt, wenn der Strompreis steigt, die Versorgung zumindest zusätzlich aus der gespeicherten Energie vorzunehmen.

Hiervon ausgehend liegt der Erfindung die Aufgabe zugrunde, ein Verfahren zum Speichern und späterer Rückgewinnung von elektrischer Energie anzugeben, das sich insbesondere zum Einsatz in Industriebetrieben eignet, aber auch großtechnische Verwendung finden kann.

Zur Problemlösung zeichnet sich ein erfindungsgemäßes Verfahren durch folgende Schritte aus:
a) Erzeugung eines Staubes, mittels einer elektrisch angetriebenen Vorrichtung,
b) Speichern des Staubs in einem Staubbunker,
c) Auslagern zumindest eines Teils des Staubs aus dem Staubbunker, wenn Bedarf an elektrischer Energie besteht,
d) Verbrennen des Staubs zur Erzeugung thermischer Energie,
e) Umwandeln der thermischen Energie in elektrische Energie.

Vorteilhaft an diesem Verfahren ist, dass alle Verfahrensschritte etablierte Technik darstellen und einfach umgesetzt werden können. Der Staub wird auf Longpiles geschüttet und kann mittels eines Claimer/Reclaimersystems automatisch gehandhabt werden. Es können große Mengen an Staub gebunkert werden.

Wirtschaftlich sinnvoll ist es, den Staub zu erzeugen und zu speichern, wenn die Strompreise niedrig sind und den Staub auszulagern, zu verbrennen und die thermische Energie in elektrische Energie umzuwandeln, wenn die Strompreise hoch sind. Wenn die mit der Durchführung der Schritte a) und b) verbundenen Kosten niedriger sind als die mit der Durchführung der Schritte c) bis e), wird von dem Betreiber der entsprechenden Anlage Gewinn gemacht, wobei die Marge sich nach dem Angebot und der Nachfrage richtet.

Der Staub kann durch Mahlen oder eine zerspanende Bearbeitung, insbesondere durch Schleifen, eines Materials erzeugt werden. Die Speicherung des Staubes in Bunkern ist bekannte Technik. Das Verbrennen des Staubes kann im einfachsten Fall mit herkömmlichen Gasbrennern erfolgen, die anstelle mit brennbarem Gas mit Staub betrieben werden. Am Ausgang des Gasbrenners findet dann eine stetige Staubexplosion statt, die die austretende Staubwolke verbrennt. Auch sind Staubbrenner bekannt. Die dabei entstehende thermische Energie in einer Dampfturbine, die einen Generator antreibt, in elektrische Energie umzuwandeln, ist ebenfalls hinreichend bekannt.

Bevorzugt wird der Staub aus getrockneten Holzhackschnitzeln oder aus trockenem Holzrecyclat erzeugt. Die Holzhackschnitzel können aus Rundholz erzeugt und gegebenenfalls vor und/oder nach ihrer Trocknung zwischengelagert werden. Diese Technik wird beispielsweise bei der Herstellung von Spanplatten angewendet. Die Hackschnitzel können mit Kraft-Wärmekopplung getrocknet werden, was sich insbesondere dann anbietet, wenn die Strompreise hoch sind, weil die Nachfrage das Angebot übersteigt. Die Aufbereitung der Hackschnitzel zu Staub erfolgt bevorzugt bei niedrigen Strompreisen, wenn das Angebot die Nachfrage übersteigt.

Die getrockneten Hackschnitzel können anschließend eingelagert werden und dann bei Bedarf aus dem Lager herausgeholt und in einer Mühle zu Staub gemahlen werden. Als Mühle kommt auch ein in der holzverarbeitenden Industrie verwendeter Refiner in Betracht.

Die Handhabung des Staubes kann von seiner Erzeugung bis zur weiteren Entnahme aus dem Staubbunker (Entspeicherung) automatisiert erfolgen.

Auch nachdem der Staub aus dem Staubbunker herausgeholt wurde, kann er bis zu seiner Verbrennung automatisiert gehandhabt werden.

Dieses Verfahren kann sowohl in der kommunalen Stromerzeugung als auch in einem holzverarbeitenden Betrieb eingesetzt werden. Das Verfahren eignet sich insbesondere sehr gut bei der Verwendung erneuerbarer Energien, da die Ausbeute hier besonders starken Schwankungen unterliegt.

Wenn der holzverarbeitende Betrieb eine Anlage zur Herstellung von Holzwerkstoffplatten umfasst, sind Vorrichtungen zur Erzeugung der Hackschnitzel aus Rundholz, ihrer Trocknung und Speicherung vorhanden. Der beim Zuschneiden (Sägen) der Holzwerkstoffplatten anfallende Staub kann ebenfalls gebunkert werden.

Der Energiebedarf eines holzverarbeitenden Betriebes kann rechnerisch im Voraus ermittelt werden. Wenn diese Ermittlung insbesondere regelmäßig erfolgt, kann dann, wenn eine zuvor definierte Energiebedarfsgrenze erreicht wird, elektrische Energie gespeichert oder zurückgewonnen werden. Wenn also die Produktion reduziert werden muss, weil die Nachfrage sinkt, kann anstelle der Produktion von beispielsweise Spanplatten Staub mit der vorhandenen elektrischen Energie erzeugt werden. Steigt der Energiebedarf des Betriebes an, weil die Nachfrage steigt, kann der Staub verbrannt und die in dem Staub gespeicherte Energie teilweise zurückgewonnen und in das elektrische Versorgungsnetz des Betriebes eingespeist werden.

Es ist ein automatisierter Ablauf realisierbar, bei dem die mögliche Verschiebung von Überschuss und Bedarf in regelmäßigen Abständen beispielsweise von einer Software ermittelt wird. Es wird eine gute Möglichkeit geschaffen, Netzschwankungen auszugleichen, die eine sichere Versorgung der Gesellschaft mit Elektroenergie leisten muss. Das gilt sowohl für einen kommunalen Stromversorger als auch für ein einzelnes Unternehmen beliebiger Größe

Da so gut wie kein Vorlauf des Prozesses erforderlich ist, ist eine rasche Umschaltung von Produktionsbetrieb in Speicherbetrieb und umgekehrt möglich.

Mit Hilfe einer Skizze soll ein Ausführungsbeispiel der Erfindung nachfolgend erläutert werden.

Die Skizze zeigt ein vereinfachtes Diagramm zum Ablauf der Energiespeicherung und Rückgewinnung. Über die in einen Betrieb eingehende Versorgungsleitung 20 wird der Betrieb mit elektrischem Strom versorgt. Von hier aus werden über Versorgungsleitungen 21, 22, 23 ein Schnitzler 3, ein Vorwärmer 4 und ein Refiner 5 mit elektrischer Energie versorgt. Aus Rundholz 1 oder Holzrecyclat 2 werden im Schnitzler 3 Holzhackschnitzel 3.1 erzeugt, wie sie beispielsweise zur Herstellung von Holzwerkstoffplatten benötigt werden. Im Vorwärmer 4 werden die Holzhackschnitzel 3.1 getrocknet und die getrockneten Holzhackschnitzel 3.1 können anschließend in einem Refiner 5 mechanisch zerfasert werden. Die zerfaserten Holzhackschnitzel können dann in einer hier nicht näher dargestellten Mühle zu Staub gemahlen und in dem Staubbunker 6 eingelagert werden. Denkbar ist es auch, die Holzhackschnitzel unmittelbar nach ihrer Trocknung zu mahlen und nicht erst in einem Refiner 5 zu zerfasern. Auch kann das Rundholz 1 beziehungsweise das Holzrecyclat 2 spanend bearbeitet, insbesondere geschliffen werden, um den Staub zu erzeugen.

Die elektrische Energie, die aufwendet wurde, aus dem Rundholz 1 bzw. dem Holzrecyclat 2 Staub zu erzeugen ist zum großen Teil in dem Staub gespeichert. Wird elektrische Energie benötigt, weil die Energiebedarfsgrenze überschritten wird, wird der Staub aus dem Staubbunker 6 herausgeholt und in einem Brenner 7 verbrannt. Dabei kann man sich zunutze machen, dass sich Staub selbst entzünden kann (Staubexplosion). Mit der bei der Verbrennung entstehenden thermischen Energie wird ein Dampferzeuger 8 betrieben. Der im Dampferzeuger 8 erzeugt Wasserdampf wird zum Antrieb einer Dampfturbine 9 verwendet, die mit einem Generator 10 verbunden ist, der elektrische Energie erzeugt und über die Versorgungsleitung 24 in die Versorgungsleitung 20 einspeist.

Das vorstehend beschriebene Kraftwerk kann ein kommunal betriebenes Kraftwerk sein. Es kann aber auch ein innerbetriebliches Kraftwerk sein, das beispielsweise in einem holzverarbeitenden Betrieb eingesetzt werden, der, wenn er Holzwerkstoffplatten produziert über den Schnitzler 3, Vorwärmer 4 und Refiner 5 sowieso verfügt, so dass nur eine Mühle zur Stauberzeugung zu ergänzen wäre. Wenn die Mahlscheiben des Refiners 5 entsprechend gestaltet sind, kann auch unmittelbar mit dem Refiner Staub anstelle von Fasern erzeugt werden. Dann, wenn der Energiebedarf sinkt (beispielsweise nachts) werden keine Holzwerkstoffplatten produziert, sondern Staub erzeugt. Steigt der Energiebedarf wieder an (tagsüber) wird der zuvor erzeugte Staub verbrannt, die thermische Energie in elektrische Energie umgeformt und dann dem Versorgungsnetz wieder zugeführt, das die Maschinen zur Herstellung der Holzwerkstoffplatten versorgt.

Der oder die Staubbunker können an verschiedenen Orten errichtet werden. Ihre Größe ist der Umgebung angepasst und ihre Anzahl ist auf die für die Energiespeicherung notwendige Staubmenge ausgerichtet. Der Staub muss nicht aus Holz bestehen. Die Verwendung jeder Art von Stäuben und Staubgemischen ist denkbar.

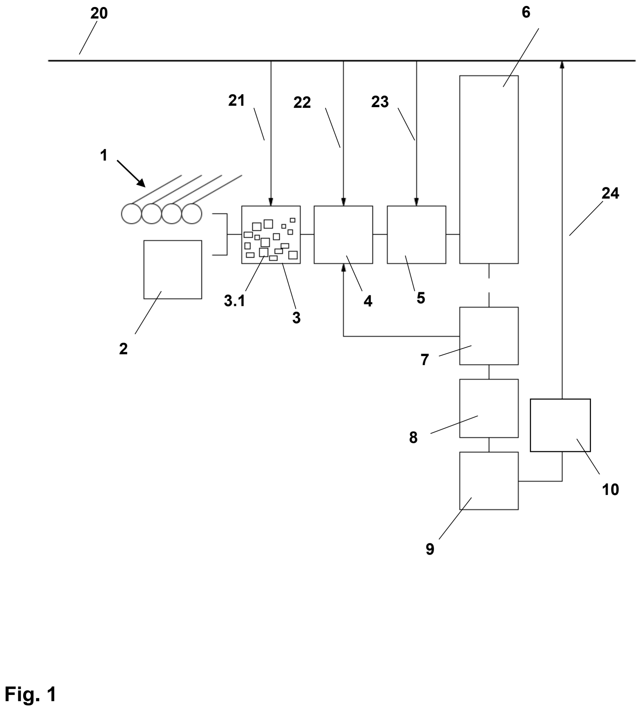

## Patentansprüche

1. Verfahren zum Speichern und späterer Rückgewinnung von elektrischer Energie mit folgenden Schritten:
a) Erzeugung eines Staubes, mittels einer elektrisch angetriebenen Vorrichtung,
b) Speichern des Staubs in einem Staubbunker,
c) Auslagern zumindest eines Teils des Staubs aus dem Staubbunker, wenn Bedarf an elektrischer Energie besteht,
d) Verbrennen des Staubs zur Erzeugung thermischer Energie,
e) Umwandeln der thermischen Energie in elektrische Energie.

2. Verfahren nach Anspruch 1, **dadurch gekennzeichnet, dass** der Staub durch Mahlen eines Materials erzeugt wird.

3. Verfahren nach Anspruch 1, **dadurch gekennzeichnet, dass** der Staub durch zerspanende Bearbeitung eines Materials erzeugt wird.

4. Verfahren nach Anspruch 3, **dadurch gekennzeichnet, dass** der Staub durch Schleifen des Materials erzeugt wird.

5. Verfahren nach Anspruch 2 oder 3, **dadurch gekennzeichnet, dass** der Staub aus getrockneten Holzhackschnitzeln erzeugt wird.

6. Verfahren nach Anspruch 2 der 3, **dadurch gekennzeichnet, dass** der Staub aus trockenem Holzrecyclat erzeugt wird.

7. Verfahren nach Anspruch 5, **dadurch gekennzeichnet, dass** die Holzhackschnitzel aus Rundholz erzeugt und vor ihrer Trocknung zwischengelagert werden.

8. Verfahren nach Anspruch 7, **dadurch gekennzeichnet, dass** die getrockneten Hackschnitzel eingelagert werden.

9. Verfahren nach Anspruch 7 oder 8, **dadurch gekennzeichnet, dass** die Hackschnitzel bei Bedarf aus dem Lager geholt und in einer Mühle zu Staub zermahlen werden.

10. Verfahren nach einem der vorstehenden Ansprüche, **dadurch gekennzeichnet, dass** die Handhabung des Staubes von seiner Erzeugung bis zur Entspeicherung automatisiert erfolgt.

11. Verfahren nach einem der Ansprüche 1 bis 6, **dadurch gekennzeichnet, dass** die Handhabung des Staubes von seiner Erzeugung bis zu seiner Verbrennung automatisiert erfolgt.

12. Verfahren nach einem der vorstehenden Ansprüche, **dadurch gekennzeichnet, dass** der Staub selbstentzündend als eine Staubwolke verbrannt wird.

13. Verfahren nach einem der vorstehenden Ansprüche, **dadurch gekennzeichnet, dass** es in einem holzverarbeitenden Betrieb durchgeführt wird.

14. Verfahren nach Anspruch 13, **dadurch gekennzeichnet, dass** der Betrieb eine Anlage zur Herstellung von Holzwerkstoffplatten umfasst.

15. Verfahren nach Anspruch 13 oder 14, **dadurch gekennzeichnet, dass** der elektrische Energiebedarf des Betriebs, insbesondere regelmäßig, ermittelt wird und dann, wenn eine zuvor definierte Energiebedarfsgrenze erreicht wird, elektrische Energie gespeichert oder zurückgewonnen wird.

16. Verfahren nach Anspruch 15, **dadurch gekennzeichnet, dass** der Energiebedarf kontinuierlich ermittelt wird.

17. Verfahren nach einem der vorstehenden Ansprüche, **dadurch gekennzeichnet, dass** die Verbrennung des Staubs der Erzeugung von Dampf dient, der eine mit einem Generator gekoppelte Dampfturbine antreibt.
